# EUROPÄISCHE PATENTSCHRIFT

(11) **EP 0 698 956 B1**
(45) Veröffentlichungstag und Bekanntmachung des Hinweises auf die Patenterteilung: **31.07.1996**
(21) Anmeldenummer: 94113214.4
(22) Anmeldetag: 24.08.1994
(51) Int. Cl.: H02K 5/167

(54) **Anlauf- bzw. Abdeckscheibe für ein Lager auf einer Rotorwelle**
Pressure or cover disc for a bearing of a rotorshaft
Disque de butée ou de couverture pour un palier d'arbre de rotor

(43) Veröffentlichungstag der Anmeldung: 28.02.1996
(73) Patentinhaber: SIEMENS AKTIENGESELLSCHAFT, 80333 München (DE)
(72) Erfinder: Rüb, Michael, Dipl.-Ing. (FH), D-97070 Würzburg (DE); Striedacher, Manfred, Dipl.-Ing. (FH), D-97318 Kitzingen (DE)

(56) Entgegenhaltungen:
- FR-A- 2 452 652
- GB-A- 2 192 312
- US-A- 4 711 590
- PATENT ABSTRACTS OF JAPAN vol. 15, no. 365 (E-1111) 13. September 1991 & JP-A-03 143 242 (HITACHI) 18. Juni 1991

## Beschreibung

Die Erfindung betrifft eine auf eine Rotorwelle aufgezogene Anlauf- bzw. Abdeckscheibe für ein Lager der Rotorwelle gemäß Anspruch 1; derartige Anlauf- bzw. Abdeckscheiben dienen einerseits zum, vorzugsweise abgedämpften, axialen Anlauf des Rotors gegen ein die Rotorwelle aufnehmendes Lager und andererseits zum Schutz des Rotors, insbesondere eines Kommutators eines Kommutatormotors, gegen austretendes Lageröl, das zum Lager bzw. zu einem Schmiermitteldepot des Lagers zurückgeführt werden soll.

Bei einem durch die JP-A-3 143 242 bekannten Elektromotor wird ein Kalottenlager dadurch schützend abgedeckt, daß ein unelastischer Ölschleuderring formschlüssig auf dem Außenumfang einer auf die Rotorwelle dichtend aufgepreßten unelastischen Buchse gehaltert ist.

Gemäß Aufgabe vorliegender Erfindung soll bei geringem Fertigungs- und Montageaufwand auch bei einem bei Herstellung von Massenartikeln unvermeidbaren gegebenenfalls leichten Schrägsitz des Lagers eine vollflächige Anlaufanlage und vollständige Abdeckung durch die Anlauf- bzw. Abdeckscheibe gewährleistet werden können; die Lösung dieser Aufgabe gelingt durch eine Anlauf- bzw. Abdeckscheibe gemäß Anspruch 1; vorteilhafte Ausgestaltungen der Erfindung sind jeweils Gegenstand der Unteransprüche.

Durch die erfindungsgemäß ausgebildete zweiteilige Anlauf- bzw. Abdeckscheibe mit einem ersten ringförmigen Scheibenteil vorzugsweise aus Kunststoff und einem zweiten ringförmigen Scheibenteil vorzugsweise aus einem Elastomer ist einerseits eine sichere gegenseitige Fixierung zwischen dem unelastischen und elastischen Scheibenteil auch beim Anliefern und Aufziehen der Scheibe auf die Rotorwelle und andererseits eine vollständige Abdichtung des Lagers gegen austretendes Lageröl, selbst bei leichter Schräglage des Lagers, gewährleistet.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; darin zeigen:

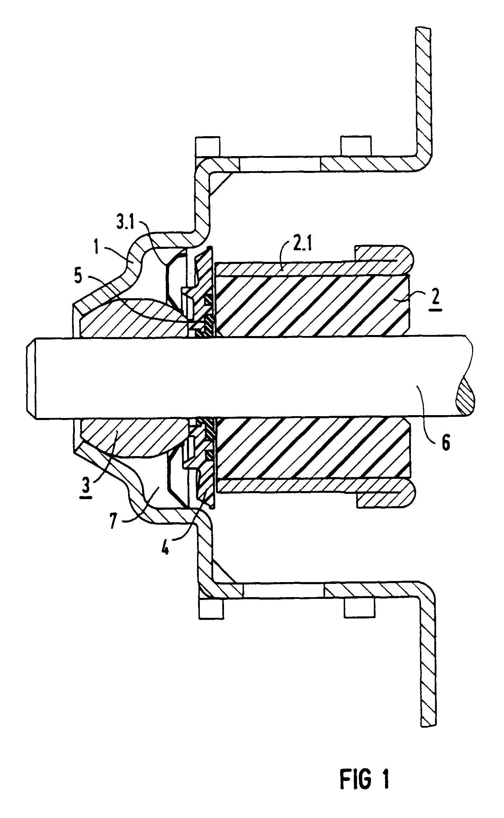

- FIG 1: in einem axialen Teilschnitt die kommutatorseitige Lagerung der Rotorwelle eines Kommutatormotors mit einer Anlauf- bzw. Abdeckscheibe zwischen einem Kalottenlager einerseits und einem Kommutator andererseits;

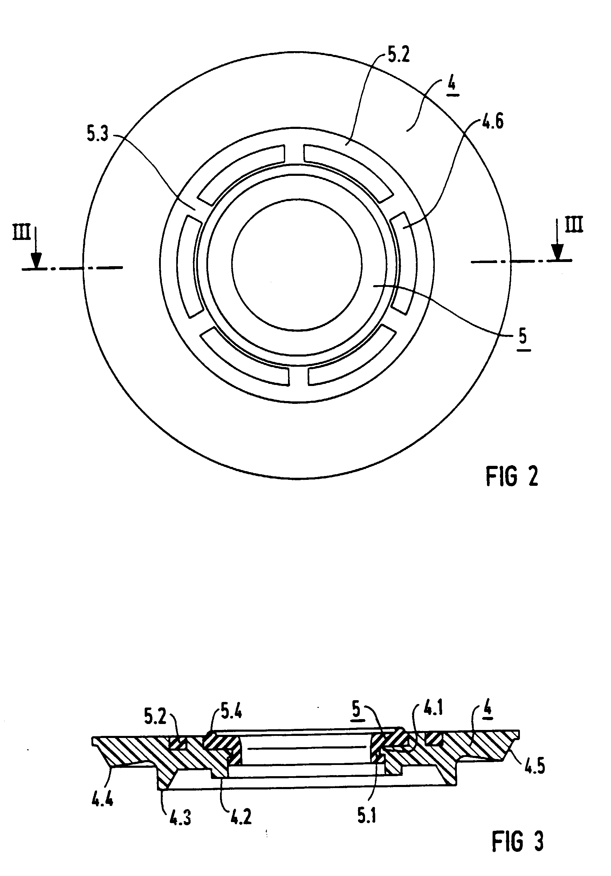

- FIG 2: eine stirnseitige Draufsicht auf die Anlauf- bzw. Abdeckscheibe gemäß FIG 1;
- FIG 3: die Anlauf- bzw. Abdeckscheibe gemäß FIG 2 im Schnittverlauf III-III.

In einem topfförmig ausgebildeten Lagerbügel 1 eines Kommutatormotors ist dessen einen Kommutator 2 mit am Umfang angeordneten Kommutator-Lamellen 2.1 aufnehmende Rotorwelle 6 in einer Kalotte 3 drehbar gelagert. Die Kalotte 3 liegt mit ihrer linken sphärischen Außenfläche gegen die Stirnseite des Lagerbügels 1 an und ist durch eine gegen die rechte sphärische Außenfläche anliegende Klemmbrille 3.1 axial lagegesichert, die ihrerseits außenrandseitig durch Verklemmen gegenüber dem topfförmigen Lagerbügel 1 fixiert ist. Oberhalb der Kalotte 3 ist durch die entsprechende topfförmige Ausbildung des Lagerbügels 1 ein Schmiermitteldepot 7 vorgesehen, in dem Schmiermittel für die vorzugsweise aus Sintermaterial gefertigte Kalotte 3 bevorratet ist.

Zwischen der klemmbrillenseitigen Stirnfläche der Kalotte 3 einerseits und der gegenüberliegenden Stirnfläche des Kommutators 2 andererseits ist die erfindungsgemäß ausgebildete Anlauf- bzw. Abdeckscheibe auf die Rotorwelle 6 derart aufgezogen, daß sie einerseits axial den Depot- und Lageraum gegenüber dem Kommutator 2 abdeckt und andererseits, insbesondere über einen axialen vorstehenden Anlaufring 4.2, einen betriebsmäßigen Anlauf des Rotors gegen die Kalotte 3 gewährleistet.

Die Anlauf- bzw. Abdeckscheibe besteht im wesentlichen aus einem unelastischen, vorzugsweise aus Kunststoff gespritzten ersten ringförmigen Scheibenteil 4 und einem damit zumindest formschlüssig verbundenen elastischen, vorzugsweise aus einem Elastomer gebildeten, zweiten ringförmigen Scheibenteil 5. Durch diesen elastischen zweiten ringförmigen Scheibenteil 5 ist in vorteilhafter Weise einerseits eine Abdichtung gegenüber der Rotorwelle 6 und andererseits eine hinreichende Elastizität derart gewährleistet, daß sich die Anlauf- bzw. Abdeckscheibe durch leichtes Kippen einer Kalotte mit montagebedingtem leichtem Schrägsitz bei einem Anlageanlauf anpassen kann, ohne daß die Dichtwirkung zur Rotorwelle 6 verlorengeht.

Zur axialen bzw. radialen formschlüssigen Fixierung zwischen dem ersten ringförmigen Scheibenteil 4 und dem zweiten ringförmigen Scheibenteil 5 weist der erste ringförmige Scheibenteil 4 im Bereich seiner rotorwellenseitigen Öffnung einen radial vorstehenden Halterungsring 4.1 geringer axialer Erstreckung auf, der von dem elastischen zweiten ringförmigen Scheibenteil 5 in Form einer axialen bzw. radialen Hinterschneidung 5.1 umgriffen ist; dadurch wird ein Lösen des elastischen zweiten ringförmigen Scheibenteils 5 von dem unelastischen ersten ringförmigen Scheibenteil 4 beim Transport und dem dichtenden Aufstecken auf die Rotorwelle 6 sowie während des Betriebes sicher verhindert und, insbesondere durch die geringe axiale Erstreckung des radial vorstehenden Halterings 4.1, ein leichtes Kippen der Anlauf- bzw. Abdeckscheibe zur Anpassung an eine im leichten Schragsitz montierte Kalotte 3 begünstigt. Die radialen Maße der Rotorwellenöffnung des ersten ringförmigen Scheibenteils 4 sowie des zweiten ringförmigen Scheibenteils 5 und dessen Elastizität sind derart festzulegen, daß beim Aufziehen der Anlauf- bzw. Abdeckscheibe auf die Rotorwelle 6 eine im Sinne einer gewünschten Abdichtung hinreichende gegenseitige Pressung erreicht wird.

Zur tangentialen Sicherung zwischen dem unelastischen ersten ringförmigen Scheibenteil 4 und dem elastischen zweiten ringförmigen Scheibenteil 5 sind an den radial inneren der axialen und radialen Fixierung dienenden Teil Speichen 5.3 angespritzt, die in Umfangsrichtung zwischen axiale Vorsprünge 4.6 des ersten ringförmigen Scheibenteils 4 im Sinne einer Verdrehsicherung greifen und im Sinne einer hinreichenden Stabilität durch einen, vorzugsweise an die Speichen 5.3 angespritzten, Außenring 5.2 untereinander verbunden sind.

Der elastische zweite ringförmige Scheibenteil 5 kann insbesondere durch Einknöpfen als zunächst getrenntes Bauteil mit dem unelastischen ersten ringförmigen Scheibenteil 4 verbunden werden oder an diesen im Sinne der vorgenannten, durch Hinterschneidungen eine formschlüssige Fixierung gewährleistenden Art, angespritzt sein.

Nach einer Ausgestaltung der Erfindung ist der elastische zweite ringförmige Scheibenteil 5 an seiner dem Kommutator 2 zugewandten Stirnfläche mit einem, vorzugsweise einstückig angespritzten, Abstütz- bzw. Dichtrand 5.4 versehen, der sowohl als axialer Anschlagdämpfer als auch als zusätzliche Dichtung, insbesondere bei leichter Schräglage der Anlauf- bzw. Abdeckscheibe bei Anlaufen an eine entsprechende mit Schrägsitz versehene Kalotte 3, dient.

Der unelastische erste ringförmige Scheibenteil 4 weist an seiner der Kalotte 3 zugewandten Stirnfläche radial außerhalb seines axial vorstehenden Anlaufrandes 4.2 eine erste umlaufende Schleuderkante 4.3 und im weiteren radialen Abstand eine zweite umlaufende Schleuderkante 4.4 zur zusätzlichen Abdeckabsicherung gegen austretendes Lageröl auf. Durch beide Schleuderkanten 4.3 bzw. 4.4 wird gewährleistet, daß eventuell austretendes Lageröl gegen die Innenwandung des topfförmig ausgebildeten Lagerbügels 1 geschleudert und dadurch in das durch diesen Lagerbügel 1 nach außen begrenzten Schmiermitteldepot 7 zurückgeführt wird. Als zusätzliche Maßnahme zur Rückführung von gegebenenfalls austretendem Lageröl ist in vorteilhafter Weise am Außenrand des ersten ringförmigen Scheibenteils 4 eine zur Kalotte 3 gerichtete Ablaufschräge 4.5 derart vorgesehen, daß ausgetretenes Lageröl insbesondere auch bei Stillstand bzw. Langsamlauf der Rotorwelle 6 zu den radial darunterliegenden Schleuderkanten 4.4 bzw. 4.3 zurückgeführt wird.

## Patentansprüche

1. Auf eine Rotorwelle aufgezogene Anlauf- bzw. Abdeckscheibe für ein Lager der Rotorwelle, insbesondere zwischen einem Kalottenlager (3) und einem Kommutator (2) eines Kommutatormotors, mit einem zu der Rotorwelle (6) berührungsfreien, axial anlaufenden unelastischen ersten ringförmigen Scheibenteil (4) und einem damit formschlüssig verbundenen, dichtend auf der Rotorwelle (6) aufliegenden elastischen zweiten ringförmigen Scheibenteil (5).

2. Anlauf- bzw. Abdeckscheibe nach Anspruch 1 mit einem ersten ringförmigen Scheibenteil (4) aus Kunststoff und einem zweiten ringförmigen Scheibenteil (5) aus einem Elastomer.

3. Anlauf- bzw. Abdeckscheibe nach Anspruch 1 und/oder 2 mit axialen bzw. radialen Hinterschneidungen (5.1), insbesondere in Form eines von dem zweiten ringförmigen Scheibenteil (5) axial und radial innen umfaßten nach radial innen vorstehenden Halterungsringes (4.1) im Randbereich der Rotorwellenöffnung des ersten ringförmigen Scheibenteils (4), zur gegenseitigen formschlüssigen axialen bzw. radialen Lagefixierung zwischen dem ersten ringförmigen Scheibenteil (4) und dem zweiten ringförmigen Scheibenteil (5).

4. Anlauf- bzw. Abdeckscheibe nach zumindest einem der Ansprüche 1-3 mit tangentialen Hinterschneidungen (5.2), insbesondere in radialem Außenabstand zu den axialen bzw. radialen Hinterschneidungen (5.1), zur formschlüssigen tangentialen gegenseitigen Lagefixierung zwischen dem ersten ringförmigen Scheibenteil (4) und dem zweiten ringförmigen Scheibenteil (5).

5. Anlauf- bzw. Abdeckscheibe nach zumindest einem der Ansprüche 1-4 mit einer, insbesondere axialen, Verknöpfung zwischen dem ersten ringförmigen Scheibenteil (4) und dem zweiten ringförmigen Scheibenteil (5).

6. Anlauf- bzw. Abdeckscheibe nach zumindest einem der Ansprüche 1-5 mit einer Anspritzung des zweiten ringförmigen Scheibenteils (5) an den ersten ringförmigen Scheibenteil (4).

7. Anlauf- bzw. Abdeckscheibe nach zumindest einem der Ansprüche 1-6 mit zumindest einer Schmiermittel-Schleuderkante (4.3;4.4) an der dem Lager (3) zugewandten Stirnseite des ersten ringförmigen Scheibenteils (4).

8. Anlauf- bzw. Abdeckscheibe nach zumindest einem der Ansprüche 1-7 mit einer außerrandseitigen, zum Lager (3) gerichteten Ablaufschräge (4.5) des ersten ringförmigen Scheibenteils (4) im Sinne eines Schmiermittelrücklaufs bei Stillstand bzw. Langsamlauf der Rotorwelle (6).

9. Anlauf- bzw. Abdeckscheibe nach zumindest einem der Ansprüche 1-8 mit einem axial vorstehenden, gegen das Lager (3) gerichteten Anlaufring (4.2) an der dem Lager (3) zugewandten Stirnfläche des ersten ringförmigen Scheibenteils (4).

10. Anlauf- bzw. Abdeckscheibe nach zumindest einem der Ansprüche 1-9 mit einem axial vorstehenden, gegen die Stirnfläche eines auf der Rotorwelle (6) gehalterten Kommutators (2) anliegenden Abstütz- bzw. Dichtring (5.4) an der dem Lager (3) abgewandten Stirnseite des zweiten ringförmigen Scheibenteils (5).

## Claims

1. Thrust and cover washer, mounted on a rotor shaft, for a bearing of the rotor shaft, in particular between a spherical plain bearing (3) and a commutator (2) of a commutator motor, having an axially thrusting, inelastic first annular washer part (4) which is not in contact with the rotor shaft (6), and having an elastic second annular washer part (5) which is connected to the said first washer part in a positive-locking manner and rests in a sealing manner on the rotor shaft (6).

2. Thrust and cover washer according to Claim 1, having a first annular washer part (4) made of plastic material and a second annular washer part (5) made of an elastomer.

3. Thrust and cover washer according to Claim 1 and/or 2 having axial and radial undercuts (5.1), in particular in the form of a radially inwardly projecting retaining ring (4.1) which is surrounded axially and radially on the inside by the second annular washer part (5), in the edge region of the rotor shaft opening of the first annular washer part (4) for the purpose of mutual positive-locking axial and radial fixing in position between the first annular washer part (4) and the second annular washer part (5).

4. Thrust and cover washer according to at least one of Claims 1-3, having tangential undercuts (5.2), in particular with radial outer spacing from the axial and radial undercuts (5.1), for the purpose of mutual positive-locking tangential fixing in position between the first annular washer part (4) and the second annular washer part (5).

5. Thrust and cover washer according to at least one of Claims 1-4, having an, in particular axial, snap-on connection between the first annular washer part (4) and the second annular washer part (5).

6. Thrust and cover washer according to at least one of Claims 1-5, the second annular washer part (5) being injection-moulded onto the first annular washer part (4) .

7. Thrust and cover washer according to at least one of Claims 1-6, having at least one lubricant spinning edge (4.3; 4.4) on the end face of the first annular washer part (4) facing the bearing (3).

8. Thrust and cover washer according to at least one of Claims 1-7, having a run-off slope (4.5), directed towards the bearing (3), on the outer edge of the first annular washer part (4) in the sense of a lubricant return when the rotor shaft (6) is stationary or is running slowly.

9. Thrust and cover washer according to at least one of Claims 1-8, having an axially projecting thrust ring (4.2), directed against the bearing (3), on the end face of the first annular washer part (4) facing the bearing (3).

10. Thrust and cover washer according to at least one of Claims 1-9, having an axially projecting supporting and sealing ring (5.4), resting against the end face of a commutator (2) retained on the rotor shaft (6), on the end face of the second annular washer part (5) facing away from the bearing (3).

## Revendications

1. Disque de butée ou de couverture monté sur un arbre de rotor pour un palier de l'arbre de rotor, notamment entre un palier (3) en forme de calotte et un collecteur (2) d'un moteur électrique à collecteur, comportant une première partie (4) non élastique de disque en forme d'anneau, s'étendant axialement sans toucher l'arbre (6) de rotor et une seconde partie (5) élastique de disque en forme d'anneau, posée de manière étanche sur l'arbre (6) de rotor et reliée à la première partie par complémentarité de forme.

2. Disque de butée ou de couverture suivant la revendication 1 comportant une première partie (4) de disque en forme d'anneau en matière plastique et une seconde partie (5) de disque en forme d'anneau en un matériau élastomère.

3. Disque de butée ou de couverture suivant la revendication 1 et/ou la revendication 2 comportant des contre-dépouilles (5.1) radiales ou axiales, notamment sous la forme d'un anneau (4.1) de retenue, entouré axialement et radialement à l'intérieur par la seconde partie (5) de disque en forme d'anneau et faisant saillie radialement vers l'intérieur de cette partie, qui se trouve dans la région de bord de l'ouverture pour l'arbre de rotor de la première partie (4) de disque en forme d'anneau, destinées à l'immobilisation mutuelle en position radialement ou axialement par forme complémentaire de la première partie (4) de disque en forme d'anneau et de la seconde partie (5) de disque en forme d'anneau.

4. Disque de butée ou de couverture suivant au moins l'une des revendications 1 à 3 comportant des contre-dépouilles (5.2) tangentielles, notamment à distance extérieure radiale des contre-dépouilles (5.1) radiales ou axiales, destinées à l'immobilisation mutuelle en position tangentiellement par forme complémentaire de la première partie (4) de disque en forme d'anneau et de la seconde partie (5) de disque en forme d'anneau.

5. Disque de butée ou de couverture suivant au moins l'une des revendications 1 à 4, comportant une liaison, notamment axiale entre la première partie (4) de disque en forme d'anneau et la seconde partie (5) de disque en forme d'anneau.

6. Disque de butée ou de couverture suivant au moins l'une des revendications 1 à 5, dans lequel la seconde partie (5) de disque en forme d'anneau est appliquée à la première partie (4) de disque en forme d'anneau par injection.

7. Disque de butée ou de couverture suivant au moins l'une des revendications 1 à 6 comportant au moins une arête (4.3 ; 4.4) centrifugelubrifiant sur le côté frontal tourné vers le palier (3) de la première partie (4) de disque en forme d'anneau.

8. Disque de butée ou de couverture suivant au moins l'une des revendications 1 à7, dans lequel la première partie (4) de disque en forme d'anneau comporte un biseau (4.5) d'écoulement vers le palier (3), en vue d'un mouvement rétrograde de l'arbre (6) de rotor en marche lente ou arrêtée.

9. Disque de butée ou de couverture suivant au moins l'une des revendications 1 à 8 comportant un anneau (4.2) de butée, vers le palier (3) et saillant axialement, sur la surface frontale tournée vers le palier (3) de la première partie (4) de disque en forme d'anneau.

10. Disque de butée ou de couverture suivant au moins l'une des revendications 1 à 9 comportant un anneau (5.4) d'étanchéité ou de support, saillant axialement et appliqué à la surface frontale d'un collecteur (2) maintenu sur l'arbre (6) de rotor, du côté frontal éloigné du palier (3) de la seconde partie (5) de disque en forme d'anneau.
